# EUROPÄISCHE PATENTSCHRIFT

(11) **EP 2 944 166 B1**
(45) Veröffentlichungstag und Bekanntmachung des Hinweises auf die Patenterteilung: **07.09.2016**
(21) Anmeldenummer: 15167886.9
(22) Anmeldetag: 15.05.2015
(51) Int. Cl.: A01B 29/04, A01B 29/06

(54) **FAHRWERK EINER LANDWIRTSCHAFTLICHEN MASCHINE**
TROLLEY OF AN AGRICULTURAL MACHINE
CHÂSSIS D'UNE MACHINE AGRICOLE

(30) Priorität: 16.05.2014 DE 102014106953
(43) Veröffentlichungstag der Anmeldung: 18.11.2015
(73) Patentinhaber: Horsch Maschinen GmbH, 92421 Schwandorf (DE)
(72) Erfinder: Hanf, Friedemann, 92421 Schwandorf (DE)
(74) Vertreter: Benninger, Johannes

(56) Entgegenhaltungen:
- EP-A1- 2 443 915
- DE-B- 1 265 597
- US-A1- 2012 077 656
- US-B2- 7 686 096

## Beschreibung

Die vorliegende Erfindung betrifft ein Fahrwerk einer landwirtschaftlichen Maschine, die mehrere luftbereifte Packer- und/oder Stützräder aufweist.

Es gibt zahlreiche Varianten gezogener oder aufgesattelter landwirtschaftlicher Maschinen. Bei besonders großen und/oder schweren Maschinen, die über eigene Fahrwerke verfügen, kann sich das Problem der Bremsleistung eines solchen Zugverbundes stellen. Da als Zugfahrzeuge meist sehr große und leistungsfähige Zugmaschinen eingesetzt werden, verfügen diese normalerweise über die ausreichende Bremsleistung, die für den gesamten Zugverbund ausreichen kann. Es gibt allerdings auch Fahrsituationen, wo die Bremsleistung des Zugfahrzeuges alleine nicht genügt, so dass auch der Anhänger bzw. die gezogene landwirtschaftliche Maschine über eigene Betriebsbremsen verfügen muss, die über das Zugfahrzeug aktiviert werden.

Außerdem gibt es im Bereich der Landtechnik verschiedene Anwendungsfälle von sog. Tandemfahrwerken, bei denen Räderpaare an einer gemeinsamen Achsschwinge aufgehängt sind. Solche Tandemfahrwerke gibt es sowohl bei selbstfahrenden Arbeitsmaschinen wie sog. Mähdreschern wie auch bei gezogenen Maschinen, bspw. bei sog. Packerwalzen. Der Aufbau solcher Tandemfahrwerke sieht meist eine Schwinge vor, welche um einen Drehpunkt frei beweglich gelagert ist. Am vorderen und hinteren Ende der Schwinge ist jeweils ein Rad oder auch eine Rolle für ein Gurtbandlaufwerk o. dgl. Element angebracht.

Typisches Merkmal bekannter Packerwalzen ist meist, dass die Packerwerkzeuge so gestaltet sind, das diese sowohl für eine Bodenbearbeitung als auch für eine Straßenfahrt geeignet sind. Die hierbei eingesetzten Tandemfahrwerke weisen den Vorteil auf, dass sie sich weitgehend der jeweiligen Bodenkontur anpassen können und von daher eine sehr gleichmäßige Bodenverdichtung erlauben. Darüber hinaus wird durch das Tandemfahrwerk aufgrund seiner Bodenanpassungsfähigkeit ein ruhiges Fahrverhalten auf dem Feld wie auf der Straße erreicht.

Aufgrund ihrer Baugröße und ihrer typischen Gewichte kann es erforderlich sein, dass solche Packerwalzen mit Betriebsbremsen ausgestattet sind. Die Integration von Betriebsbremsen führt jedoch gerade bei Tandemfahrwerken mit sehr kurz bauenden Achsschwingen zu Problemen, da das Fahrwerk aufgrund unterschiedlicher Bremskräfte am vorderen oder hinteren Rad des Tandems dazu neigen kann, sich aufzuschwingen oder auch in unerwünschter Weise abzusenken, was bspw. in der DE 1 265 597 B, die eine gefederte Radaufhängung für Fahrzeuge offenbart, verdeutlicht ist. Dieser Effekt kann insbesondere auch dann auftreten wenn nur eines der beiden Räder einer Tandemaufhängung gebremst wäre.

Zwar würde sich der Effekt etwas reduzieren, wenn nur das hintere Rad gebremst wäre, doch käme es dadurch zu unterschiedlichen Belastungen der Räder bzw. zur einer ungleichmäßigen Einleitung der Kräfte in die Rahmenkonstruktion, was wiederum zu negativen Effekten führen kann. Darüber hinaus würden die Räder unterschiedlich verschleißen, was sich gerade im Hinblick auf eine Bodenbearbeitung und eine möglichst gleichmäßige Rückverfestigung als nachteilig herausgestellt hat.

Eine alternativ ausgestaltete Bremseinrichtung für gezogene landwirtschaftliche Maschinen, bei der solche Aufstelleffekte weitgehend vermieden werden können, geht aus der US 7 686 096 B2 hervor. Da die Bremsfläche hierbei auf die Lauffläche der Räder wirkt, drohen allerdings ein hoher Reifenverschleiß und eine Verschmutzungsanfälligkeit der Bremsen. Zudem besteht die Gefahr, dass die Bremswirkungen an mehreren der nebeneinander angeordneten Reifen jeweils unterschiedlich ausfallen können, insbesondere aufgrund unterschiedlicher Reibungskoeffizienten zwischen den jeweiligen Bremsflächen und den Laufflächen der mit der Bremsfläche beaufschlagbaren Reifen.

Das vorrangige Ziel der vorliegenden Erfindung besteht darin, eine gezogene landwirtschaftliche Maschine, die ein Fahrwerk mit einer Mehrzahl von Reifen aufweist, mit einer effektiven Betriebsbremse auszustatten, bei der negative Effekte durch auftretende Bremsmomente vermieden werden, insbesondere bei paarweise gelagerten Reifen, die an einer beweglichen Achsschwinge aufgehängt sind.

Dieses Ziel wird mit dem Gegenstand des unabhängigen Anspruchs 1 erreicht. Weitere vorteilhafte Ausgestaltungen werden durch die abhängigen Ansprüche beschrieben.

Die der Erfindung zugrunde liegende wesentliche Idee lässt sich dadurch charakterisieren, dass eine Bremse für eine landwirtschaftliche Maschine mit spezieller Achskonstruktion bzw. Achsaufhängung zur Verfügung gestellt werden soll, bei der die Achsen einen Versatz haben und zum Rahmen beweglich aufgehängt sind. Die Bremskräfte bzw. die Bremsmomente werden mit Hilfe der erfindungsgemäßen Fahrwerksgestaltung in einer Weise in den Rahmen eingeleitet, dass im Wesentlichen keine Achslast- und/oder Radlastverlagerungen auftreten, so dass auch kein Aufbäumen oder Einknicken der Radaufhängungen stattfindet. Konstruktiv wird dies mittels einer speziellen Konstruktion in einfachster Weise dadurch gelöst, dass zumindest ein gebremstes Rad über eine zusätzliche Strebe an einem festen Rahmen- oder Aufhängungsteil abgestützt ist. Dies kann wahlweise ein maschinenfestes Rahmen- oder Aufhängungsbauteil oder auch ein bewegliches Bauteil sein, bspw. eine schwenkbare Achsschwinge, an dem bspw. eine Bremsankerplatte einer Trommelbremse oder ein Bremssattel einer Scheibenbremse abgestützt ist, so dass dort Bremsmomente aufgenommen und ein Bremsnicken oder Eintauchen verhindert werden.

Wahlweise kann das Bremsaggregat (Bremssattel oder Bremstrommel) in einer Weise aufgehängt bzw. ausgestaltet sein, dass die Lenker zweier Stützstreben zusammengenommen ein Parallelogramm bilden und an deren Eckpunkten die Lenker gelenkig miteinander verbunden sind, was im Wesentlichen einem sog. Vierlenker oder Parallelogrammgestänge entspricht. Das Bremsmoment wird dann über jeweils eine Strebe vom Bremssattel oder einer Bremsankerplatte einer Bremstrommel (oder auch einem achsnahen Aufhängungsabschnitt bei ungebremsten Rad eines Räderpaares, dessen anderes Rad eine Trommel- oder Scheibenbremse aufweist) direkt in den Rahmen eingeleitet. Das Tandem des gemeinsam aufgehängten Räderpaares wird vom Bremsmoment nicht beeinflusst, so dass bei Bremsvorgängen auch keine Verlagerungen der Radlasten auftreten. Somit wird ein "in die Knie gehen" oder ein Aufschwingen im Wesentlichen durch eine dafür ausgelegte Kinematik verhindert. Es werden keinerlei weiter Stellteile wie Zylinder oder Motoren etc. benötigt, wodurch das Ziel der Erfindung mit einfachen und kostengünstigen Mittel erreicht wird. Hierdurch wird darüber hinaus eine sehr kompakte Einheit geliefert, bei der wiederum aufgrund der geringen Hebellängen die Hebelwirkungen und somit die Momente sehr gering ausfallen können.

Zur Erreichung des oben genannten Ziels schlägt die vorliegende Erfindung ein Fahrwerk einer gezogenen oder aufgesattelt an eine landwirtschaftliche Zugmaschine angehängten oder als Teil einer gezogenen oder aufgesattelten Gerätekombination ausgebildeten landwirtschaftlichen Maschine vor, die mehrere luftbereifte Packer- und/oder Stützräder für eine Feldfahrt auf unbefestigtem Untergrund und/oder für eine Straßenfahrt auf befestigtem Grund aufweist, wobei jeweils wenigstens zwei nebeneinander und in Fahrtrichtung versetzt zueinander oder auch annähernd in Fahrtrichtung fluchtend hintereinander angeordnete Laufräder als Laufradpaar über eine gemeinsame Aufhängung an einem Maschinenrahmen gehalten und/oder beweglich gelagert sind. Wahlweise kann das Fahrwerk auch Teil einer selbstfahrenden landwirtschaftlichen Maschine sein. Die Laufradpaare des erfindungsgemäßen Fahrwerks sind jeweils an einer schwenkbar am Maschinenrahmen gelagerten Achsschwinge gelagert, wobei diese Achsschwinge gegenüber dem Maschinenrahmen eine definierte Schwenkbarkeit um einen Schwenkwinkel aufweist. Außerdem verfügt zumindest eines der beiden Laufräder des entsprechenden Laufradpaares über eine Bremseinrichtung, die bspw. eine Bremstrommel oder eine mit dem jeweiligen Laufrad drehfest gekoppelte Bremsscheibe und einen an der Achsschwinge abgestützten Bremssattel umfasst, wobei die wenigstens eine Bremseinrichtung über wenigstens eine Stützstrebe und/oder ein Gestänge an einem Aufhängungsabschnitt der Fahrwerksaufhängung bzw. des Maschinenrahmens abgestützt ist. Hierbei kann insbesondere vorgesehen sein, dass die Abstützung der wenigstens einen Bremseinrichtung am Aufhängungsabschnitt der Aufhängung und/oder des Maschinenrahmens eine Viergelenkanordnung bzw. eine Parallelogrammanordnung bildet.

Wahlweise können auch die beiden Aufhängungsabschnitte der Laufräder, d.h. der Bremssattel oder die Bremsankerplatte und ein achsnaher Aufhängungsabschnitt des jeweiligen Laufradpaares über ein Gestänge miteinander gekoppelt sein und sich gegeneinander und/oder an einem Abschnitt der Aufhängung abstützen.

Gemäß einer weiteren alternativen Ausgestaltung kann auch jedes Laufrad des Laufradpaares über eine separate Bremseinrichtung verfügen, die eine mit dem jeweiligen Laufrad drehfest gekoppelte Bremsscheibe und einen an der Achsschwinge abgestützten Bremssattel umfasst, wobei die beiden Bremssättel eines Laufradpaares über ein Gestänge miteinander gekoppelt sind und sich gegeneinander und/oder an einem Abschnitt der Aufhängung abstützen. Zudem kann wahlweise auch jedes Laufrad des Laufradpaares über eine separate Trommelbremseinrichtung verfügen, die eine mit dem jeweiligen Laufrad drehfest gekoppelte Bremstrommel und eine an der Achsschwinge abgestützte Bremsankerplatte o. dgl. nicht rotierendes Teil der Bremse mit den darin gelagerten Bremsbacken umfasst, wobei die beiden Bremsankerplatten eines Laufradpaares über ein Gestänge miteinander gekoppelt sind und sich gegeneinander und/oder an einem Abschnitt der Aufhängung abstützen.

Wenn im vorliegenden Zusammenhang von einer Bremseinrichtung die Rede ist, so sind damit gleichermaßen Trommel- oder Scheibenbremsen oder grundsätzlich jede andere Art von Bremseinrichtungen umfasst, die in der Lage sind, Lauf- oder Stützräder von landwirtschaftlichen Fahrzeugen in effektiver Weise abzubremsen.

Die Mehrzahl von Laufradpaaren der erfindungsgemäßen landwirtschaftlichen Maschine bzw. des Fahrwerks einer solchen Maschine, die typischerweise jeweils parallel und in geringen Abständen voneinander nebeneinander angeordnet sind, können wahlweise heckseitig an der landwirtschaftlichen Maschine oder auch in einem mittleren Bereich angeordnet sein. Grundsätzlich ist auch jede andere Anordnung denkbar, bei der die gebremsten Räder einen Teil des Fahrwerks der erfindungsgemäßen landwirtschaftlichen Maschine bilden. Das erfindungsgemäße Fahrwerk kann beispielsweise einen Bestandteil einer gebremsten landwirtschaftlichen Packervorrichtung bilden, wobei die Laufräder jeweils die Packerräder bilden. Die Packerräder sind hierbei als sog. Tandempaare angeordnet, bei denen jeweils zwei in Laufrichtung leicht versetzte Räder an einer gemeinsamen Pendelachsschwinge aufgehängt sind. Der Versatz der beiden Räder eines Laufradpaares kann bspw. einem halben Raddurchmesser oder einem Wert in ähnlicher Größenordnung entsprechen. Auch ein geringerer Versatz von nur etwa einem Drittel des Raddurchmessers oder etwas weniger ist möglich, so dass sich eine Vielzahl solcher nebeneinander angeordneter Räderpaare wie eine nachgiebige und sich Bodenunebenheiten besonders gut anpassende einzige Packerwalze eines Reifenpackers verhält. Hierbei kann zudem vorgesehen sein, dass eine Mehrzahl von eng nebeneinander angeordneten Laufradpaaren jeweils an weitgehend identischen Stützabschnitten des gemeinsamen Maschinenrahmens angeordnet und gelagert ist.

Wie erwähnt, kann den beiden Laufrädern eines Laufradpaares jeweils eine separate Bremseinrichtung zugeordnet sein, welche über das Gestänge miteinander gekoppelt sind. Ebenso möglich ist eine Variante, bei denen nur eines der beiden Laufräder eines Laufradpaares gebremst ist, wobei die Gestängeabstützung dafür sorgt, dass ein unerwünschter Aufbäumeffekt unterdrückt wird.

Bei dem Fahrwerk ist vorzugsweise vorgesehen, dass die Achsschwinge ungefähr mittig gelagert ist, und dass sie an ihren beiden gegenüber liegenden Enden jeweils die Achslager für die beiden Laufräder ihres zugeordneten Laufradpaares trägt. Auch kann vorzugsweise vorgesehen sein, dass die Achsschwingen jeweils annähernd symmetrisch aufgebaut sind und dass jede der Achsschwingen ungefähr mittig mit einer horizontalen Schwenkachse in einem Stützabschnitt des Maschinenrahmens gelagert ist.

Um negative Effekte durch Bremsmomente zu vermeiden, kann das jedem der beiden Bremssättel des Laufradpaares jeweils zugeordnete Gestänge mit dem Stützabschnitt des Maschinenrahmens verbunden sein. Zudem kann jeder Bremssattel des Laufradpaares über einen separaten Gestängeabschnitt und einen damit gelenkig verbundenen Verbindungsbügel mit dem Stützabschnitt des Maschinenrahmens verbunden sein.

Hierbei kann vorgesehen sein, dass die mit dem Stützabschnitt und/oder dem Verbindungsbügel verbundenen Gestängeabschnitte der beiden Laufräder des Laufradpaares zusammen ein Viergelenk oder ein Parallelogramm bilden.

Wahlweise können die mit dem Stützabschnitt und/oder dem Verbindungsbügel verbundenen Gestängeabschnitte der beiden Laufräder des Laufradpaares jeweils Teile von Trägern für die beiden Bremssättel (bei Scheibenbremsen) bzw. die Bremsankerplatten (bei Trommelbremsen) der Laufräder bilden.

Wie erwähnt, kann das erfindungsgemäße Fahrwerk bspw. Teil einer gebremsten landwirtschaftlichen Packervorrichtung sein, wobei die Laufräder jeweils die Packerräder bilden. Hierbei sind typischerweise mehrere Laufradpaare heckseitig an der landwirtschaftlichen Maschine bzw. an der Packervorrichtung angeordnet. Je nach Bauart der Maschine kann das Fahrwerk wahlweise auch derart ausgebildet sein, dass mehrere Laufradpaare in einem mittleren Abschnitt an der landwirtschaftlichen Maschine angeordnet sind. Je nach Ausführungsvariante kann zudem vorgesehen sein, dass die Laufradpaare in der Höhe verstellbar und/oder für eine Feldfahrt anhebbar und/oder aus dem Eingriff mit dem Boden bringbar sind.

Zusätzlich sei an dieser Stelle erwähnt, dass die Laufräder des erfindungsgemäßen Fahrwerks wahlweise luftbereifte Stütz- oder Packerräder sein können. Die Laufräder können jedoch auch Teile von Gurtbandlaufwerken sein, die über entsprechende Achsschwingen zu Tandemanordnungen zusammengebaut sind. Auch diese Laufräder von Gurtbandlaufwerken sind von der Definition der vorliegenden Erfindung mitumfasst.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht eines Fahrwerksabschnittes einer landwirtschaftlichen Maschine mit insgesamt fünf nebeneinander angeordneten Laufradpaaren.
Fig. 2 zeigt zwei schematische Ansichten eines der Laufradpaare aus Fig. 1.
Fig. 3 zeigt zwei schematische Seitenansichten von gebremsten Laufrädern des Laufradpaares gemäß Fig. 2, die jeweils mit Scheibenbremsen ausgestattet sind.
Fig. 4 zeigt drei Detailansichten einer Aufhängung eines Laufradpaares gemäß Fig. 2, wobei dort Komponenten der Bremsanlagen und Abstützelemente des Laufradpaares erkennbar sind.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Fahrwerk ausgestaltet sein kann und stellen keine abschließende Begrenzung dar.

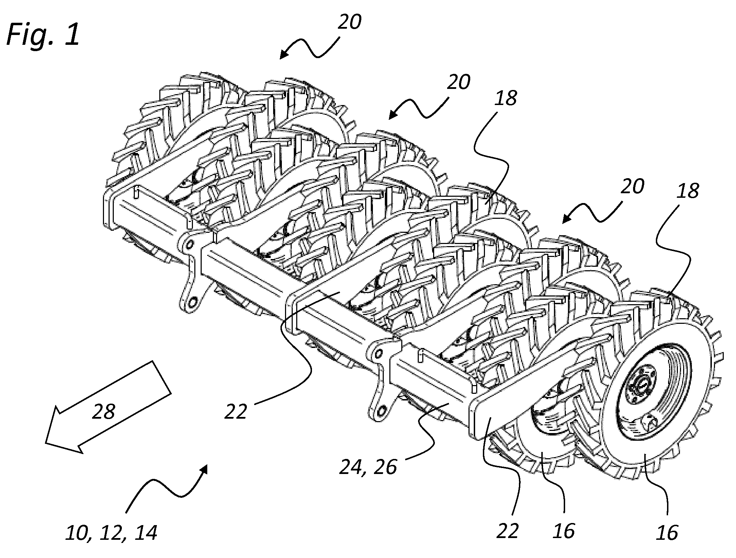

Die schematische Perspektivansicht der Fig. 1 zeigt einen Teil eines Fahrwerks 10 einer landwirtschaftlichen Maschine 12, die bspw. eine Packervorrichtung oder eine kombinierte Maschine 12 mit einer sog. Reifenpackerwalze 14 sein kann. Die hier beispielhaft gezeigte Reifenpackerwalze 14 umfasst eine Mehrzahl von eng nebeneinander angeordneten Lufträder 16 mit relativ ausgeprägter Profilierung 18 am jeweiligen Außenumfang der Reifen. Jeweils zwei benachbarte Laufräder 16 bilden ein Laufradpaar 20, das an einer gemeinsamen Längsstrebe 22 eines Rahmenabschnittes 24 gelagert ist. Im gezeigten Ausführungsbeispiel umfasst der Rahmenabschnitt 24 ein starkes horizontales Querrohr 26 mit Vierkantprofil, mit dem die flachen Längsstreben 22 jeweils verschraubt oder - wie hier gezeigt - verschweißt sind, so dass sie jeweils horizontal vom Querrohr 26 abragen. Ein in der Fig. 1 jeweils verdeckter Abschnitt der Längsstreben 22 weist nach unten und bildet eine Verankerung für die in den nachfolgenden Figuren näher erläuterten Achsschwingen für die Radaufhängungen.

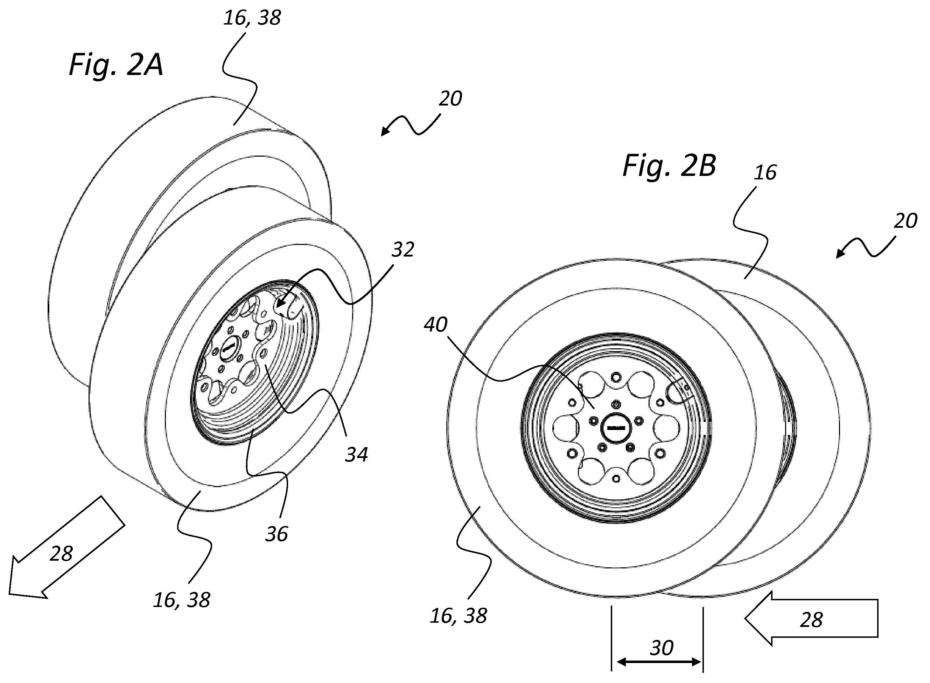

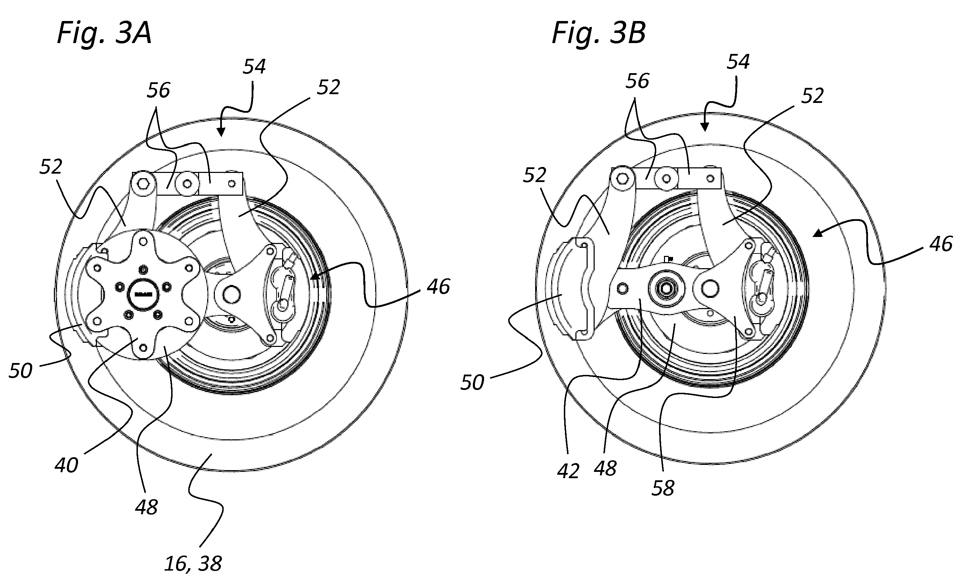

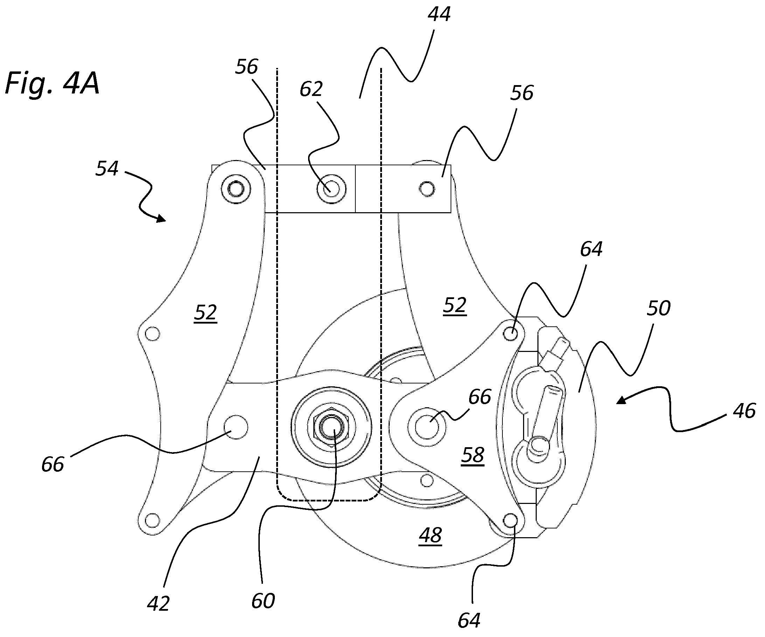

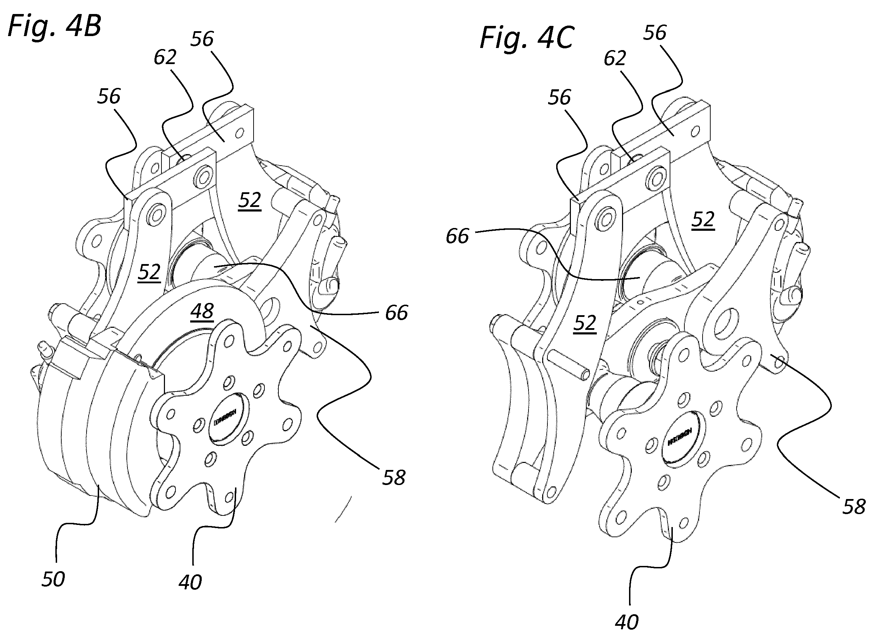

Jedem der Räderpaare 20 ist jeweils eine separate Längsstrebe 22 zugeordnet. Wie es die beiden Ansichten der Figuren 2A und 2B verdeutlichen, sind die beiden Laufräder 16 eines Räderpaares 22 jeweils in Längsrichtung bzw. in Arbeitsrichtung 28 der Maschine 12 versetzt zueinander angeordnet. Dieser Längsversatz 30 ist durch die Länge der jeweiligen Achsschwingen (vgl. Figuren 3 und 4) definiert und kann bspw. ungefähr einem Drittel des Raddurchmessers der beiden gleichgroßen Räder 16 entsprechen (vgl. hierzu Fig. 2B).

Die Laufräder 16 können im Übrigen völlig herkömmlicher Bauweise sein, mit einem inneren Stahlrad 32, bestehend aus einer Radschüssel 34, die mit einer Radfelge 36 verbunden ist, auf welcher der Luftreifen 38 mit der äußeren Profilierung 18 sitzt. Die Radschüssel 34 ist mit einer sternförmigen Radnabe 40 verschraubt, die in den Figuren 4B und 4C näher verdeutlicht ist. die Radnaben 40 sind jeweils frei drehbar an der Achsschwinge 42 gelagert, die wiederum jeweils schwenkbar an einem Ausleger der Längsstreben 22 gelagert sind.

Wie es die Figuren 3A und 3B verdeutlichen, umfasst die Aufhängung für jedes Laufradpaar 20 eine Achsschwinge 42, die im Ruhezustand, in dem die beiden Räder 16 auf horizontalem Untergrund stehen, horizontal ausgerichtet ist. Jedes der Laufradpaare 20 ist jeweils an einer schwenkbar am Maschinenrahmen gelagerten Achsschwinge 42 gelagert, wobei diese Achsschwingen 42 gegenüber einem Aufhängungsteil 44 des Maschinenrahmens eine definierte Schwenkbarkeit aufweisen. Zudem verfügt jedes Laufrad 16 des Laufradpaares 20 über eine separate Bremseinrichtung 46, die eine mit der Nabe 38 des jeweiligen Laufrades 16 drehfest gekoppelte Bremsscheibe 48 und einen an der Achsschwinge 42 abgestützten Bremssattel 50 umfasst, der die Bremsscheibe 48 umgreift und bei hydraulischer Betätigung bremsend auf sie einwirkt, so dass das Rad 16 verzögert werden kann. An jedem der beiden Bremssättel 50 eines Laufradpaares 20 ist jeweils eine vertikal nach oben weisende Stützstrebe 52 angeordnet, so dass die Bremssättel 50 über ein Gestänge 54 miteinander gekoppelt sind und sich gegeneinander und/oder an einem Abschnitt der Aufhängung abstützen. Die beiden Stützstreben 52 weisen an ihren Enden jeweils einen horizontalen Verbindungsabschnitt 56, der gelenkig mit der Stützstrebe 52 sowie gelenkig mit dem vertikal verlaufenden Aufhängungsteil 44 verbunden ist, der wiederum fest mit der jeweiligen Längsstrebe 22 des Laufradpaares 20 (vgl. Fig. 1) verbunden ist.

Aus Stabilitätsgründen bestehen die Teile 52 und 56 des Gestänges 54 aus ausreichend festem Material, insbesondere aus Stahlteilen wie bspw. Stahlguss oder aus Schmiedeteilen, ebenso wie die Achsschwinge 42 und ggf. die Bremsankerplatten 58, an denen die Bremssättel 50 jeweils montiert sind, so dass sie fest mit den gegenüberliegenden Enden der Achsschwinge 42 verbunden sind. Das mittig in der Achsschwinge 42 angeordnete Schwenklager 60 liefert eine schwenkbare Verbindung mit einem unteren Ende des Aufhängungsteils 44, das an seinem oberen Ende fest mit der jeweiligen Längsstrebe 22 des Laufradpaares 20 verbunden ist.

Die gezeigte Anordnung des Gestänges 54 liefert somit eine parallelogrammähnliche Anordnung, die ein Bremsnicken oder Aufbäumen des Laufradpaares auch bei stärkeren Verzögerungen verhindert, da sich die beim Bremsen entstehenden Momente über das Gestänge 54 bzw. die gelenkig miteinander verbundenen Stützstreben 52 und Verbindungsabschnitte 56, die gelenkig am Aufhängungsteil 44 verankert sind, gegenseitig abstützen und aufheben.

In den Figuren 4A bis 4C finden sich nochmals die erwähnten Einzelteile der Radaufhängung eines Laufradpaares 20 im Detail. So zeigt die Seitenansicht der Fig. 4A insbesondere die Anordnung und Lagerung der Achsschwinge 42 in ihrem Schwenklager 60 am unteren Ende des lediglich in der Fig. 4A angedeuteten Aufhängungsteils 44. Die nach oben weisenden Stützstreben 52 sind an ihren oberen Enden gelenkig mit den horizontalen kurzen Verbindungsabschnitten 56 verbunden, die wiederum an einem höheren Abschnitt des Verbindungsteils 44 gelenkig verankert sind, und zwar in einem gemeinsamen Gelenkpunkt 62. Die beiden Bremsankerplatten 58 sind fest an der Achsschwinge 42 verankert und tragen an ihren nach außen weisenden Gabelungen 64 jeweils die Bremssättel 50.

Die beiden schematischen Perspektivansichten der Figuren 4B und 4C zeigen weitere Bauteile der Radaufhängung und verdeutlichen u.a., dass die Stützstreben 52 fest mit den Bremsankerplatten 58 verbunden sind. Ebenfalls erkennbar sind die endseitig der Achsschwinge 42 verankerten Achslager 66 für die beiden Laufräder 16 des Laufradpaares 20, welche die Bremsschreiben 48 und die Radnaben 40 tragen und drehbar lagern.

Es sei an dieser Stelle ausdrücklich betont, dass die in den Figuren 3 und 4 gezeigten Bremseinrichtungen 46 auch durch Trommelbremsen anstelle von Scheibenbremsen gebildet sein können, was den grundsätzlichen Aufbau nicht ändert. Bei der Verwendung von Trommelbremsen sind die Stützstreben 52 sinnvollerweise mit den Bremsankerplatten verbunden, da diese die nicht rotierenden Teile der jeweiligen Bremsen bilden. Außerdem sei betont, dass nicht zwingend beide Räder eines Laufradpaares 20 gebremst sein müssen. Es kann vielmehr ausreichen, jeweils nur ein Rad mit einer Bremseinrichtung 46 auszustatten, während das jeweils andere Rad ungebremst bleiben kann. In diesem Fall fehlt die Bremstrommel und der Bremssattel, so dass die Stützstreben 52 sinnvollerweise an einem achsnahen Aufhängungsabschnitt anzubringen sind, bspw. an der Achsschwinge 42.

Wie erwähnt, kann das beschriebene Fahrwerk 10 insbesondere Teil einer gebremsten landwirtschaftlichen Packervorrichtung sein, wobei die Laufräder 16 jeweils die Packerräder einer Packerwalze 14 bilden. Je nach Bauart der Maschine 12 kann das Fahrwerk 10 wahlweise auch derart ausgebildet sein, dass mehrere Laufradpaare 20 in einem mittleren Abschnitt an der landwirtschaftlichen Maschine 12 angeordnet sind. Je nach Ausführungsvariante kann zudem vorgesehen sein, dass die Laufradpaare 20 in der Höhe verstellbar und/oder für eine Feldfahrt anhebbar und/oder aus dem Eingriff mit dem Boden bringbar sind.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Fahrwerk
- 12: landwirtschaftliche Maschine
- 14: Packerwalze, Reifenpackerwalze
- 16: Rad, Laufrad, Luftrad, Luftreifen
- 18: Profilierung (Reifen)
- 20: Laufradpaar
- 22: Längsstrebe
- 24: Rahmenabschnitt
- 26: Querrohr, Vierkantrohr
- 28: Arbeitsrichtung, Fahrtrichtung
- 30: Längsversatz, Radversatz
- 32: Stahlrad
- 34: Radschüssel
- 36: Felge, Radfelge
- 38: Luftreifen
- 40: Nabe, Radnabe
- 42: Achsschwinge
- 44: Aufhängungsteil, Aufhängungsabschnitt
- 46: Bremseinrichtung
- 48: Bremsscheibe
- 50: Bremssattel
- 52: Stützstrebe
- 54: Gestänge
- 56: Verbindungsabschnitt
- 58: Bremsankerplatte
- 60: Schwenklager (Achsschwinge)
- 62: Gelenkpunkt
- 64: Gabelung (der Bemsankerplatte)
- 66: Achslager

## Patentansprüche

1. Fahrwerk (10) einer gezogenen oder aufgesattelt an eine landwirtschaftliche Zugmaschine angehängten oder selbstfahrenden landwirtschaftlichen Maschine (12), die mehrere, insbesondere luftbereifte Packer-, Stütz- und/oder Laufräder (16) aufweist, wobei jeweils wenigstens zwei nebeneinander und in Fahrtrichtung (28) versetzt zueinander oder hintereinander angeordnete Laufräder (16) als Laufradpaar (20) über eine gemeinsame Aufhängung an einem Maschinenrahmen (22, 24, 44) gehalten und/oder beweglich gelagert sind, **dadurch gekennzeichnet, dass** das jeweilige Laufradpaar (20) an einer schwenkbar am Maschinenrahmen (22, 24, 44) gelagerten Achsschwinge (42) gelagert ist, welche Achsschwinge (42) gegenüber dem Maschinenrahmen (22, 24, 44) eine definierte Schwenkbarkeit um einen Schwenkwinkel aufweist, und wobei wenigstens ein Laufrad (16) des jeweiligen Laufradpaares (20) über eine Bremseinrichtung (46) verfügt, die über wenigstens eine Stützstrebe (52) und/oder ein Gestänge (54) und/oder ein Gestängeabschnitt (52) an einem Aufhängungsabschnitt (44) der Aufhängung bzw. des Maschinenrahmens (22, 24) abgestützt ist.

2. Fahrwerk nach Anspruch 1, bei dem die Abstützung der wenigstens einen Bremseinrichtung am Aufhängungsabschnitt (44) der Aufhängung und/oder des Maschinenrahmens (22, 24) eine Viergelenkanordnung oder eine Parallelogrammanordnung bildet.

3. Fahrwerk nach Anspruch 1 oder 2, bei dem beiden Laufrädern (16) eines Laufradpaares (20) jeweils eine separate Bremseinrichtung (46) zugeordnet ist, wobei wenigstens eine der Bremseinrichtungen (46) über wenigstens eine Stützstrebe (52) und/oder ein Gestänge (54) am Aufhängungsabschnitt (44) der Aufhängung bzw. des Maschinenrahmens (22, 24) abgestützt ist.

4. Fahrwerk nach Anspruch 3, bei dem beide Bremseinrichtungen (46) des Laufradpaares (20) über jeweils eine Stützstrebe (52) und/oder ein Gestänge (54) am Aufhängungsabschnitt (44) der Aufhängung bzw. des Maschinenrahmens (22, 24) abgestützt und/oder über das Gestänge (54) miteinander gekoppelt sind.

5. Fahrwerk nach Anspruch 3 oder 4, bei dem die beiden Bremseinrichtungen (46) eines Laufradpaares (20) oder die wenigstens eine Bremseinrichtung (46) eines der Laufräder (16) und ein achsnaher Bereich des jeweils anderen, ungebremsten Laufrades (16) über ein Gestänge (54) miteinander gekoppelt sind, welches die Achsschwinge (42) und/oder die Laufräder (16) des jeweiligen Laufradpaares gegeneinander und/oder an einem Abschnitt der Aufhängung (44) abstützt.

6. Fahrwerk nach einem der Ansprüche 1 bis 5, bei dem die Bremseinrichtung (46) des wenigstens einen Laufrades (16) des Laufradpaares (20) oder die Bremseinrichtungen (46) beider Laufräder (16) jeweils eine mit dem jeweiligen Laufrad (16) drehfest gekoppelte Bremsscheibe (48) und einen an der Achsschwinge (42) abgestützten Bremssattel (50) umfasst, wobei die beiden Bremssättel (50) des jeweiligen Laufradpaares (20) über ein Gestänge (54) miteinander gekoppelt sind und/oder sich gegeneinander und/oder an einem Abschnitt der Aufhängung (44) abstützen.

7. Fahrwerk nach einem der Ansprüche 1 bis 6, bei dem das jedem der beiden Bremssättel (50) des Laufradpaares (20) jeweils zugeordnete Gestänge (54) mit dem Stützabschnitt (44) des Maschinenrahmens (22, 24) verbunden ist.

8. Fahrwerk nach Anspruch 7, bei dem jeder Bremssattel (50) des Laufradpaares (20) über einen separaten Gestängeabschnitt (52) und einen damit gelenkig verbundenen Verbindungsbügel (56) mit dem Stützabschnitt (44) des Maschinenrahmens (22, 24) verbunden ist.

9. Fahrwerk nach Anspruch 7 oder 8, bei dem die mit dem Stützabschnitt (44) und/oder dem Verbindungsbügel (56) verbundenen Gestängeabschnitte (52) der beiden Laufräder (16) des Laufradpaares (20) jeweils Teile von Trägern für die beiden Bremssättel (50) der Laufräder (16) bilden.

10. Fahrwerk nach einem der Ansprüche 1 bis 9, bei dem die mit dem Stützabschnitt (44) und/oder dem Verbindungsbügel (56) verbundenen Gestängeabschnitte (52) der beiden Laufräder (16) des Laufradpaares (20) zusammen ein Viergelenk oder ein Parallelogramm bilden.

11. Fahrwerk nach einem der Ansprüche 1 bis 10, bei dem eine Mehrzahl von eng nebeneinander angeordneten Laufradpaaren (20) jeweils an weitgehend identischen Stützabschnitten (44) des gemeinsamen Maschinenrahmens (22, 24) angeordnet und gelagert ist.

12. Fahrwerk nach einem der Ansprüche 1 bis 11, das Teil einer gebremsten landwirtschaftlichen Packervorrichtung (12, 14) ist, wobei die Laufräder (16) jeweils die Packerräder (14) bilden.

13. Fahrwerk nach einem der Ansprüche 1 bis 12, bei dem mehrere Laufradpaare (20) heckseitig an der landwirtschaftlichen Maschine (12) angeordnet sind.

14. Fahrwerk nach einem der Ansprüche 1 bis 12, bei dem mehrere Laufradpaare (20) in einem mittleren Abschnitt an der landwirtschaftlichen Maschine (12) angeordnet sind.

15. Fahrwerk nach Anspruch 13 oder 14, bei dem die Laufradpaare (20) in der Höhe verstellbar und/oder für eine Feldfahrt anhebbar und/oder aus dem Eingriff mit dem Boden bringbar sind.

## Claims

1. An undercarriage (10) of an agricultural machine (12) that is towed or that is hitched in semi-mounted fashion to an agricultural towing machine or that is self-propelled, which agricultural machine (12) has several packer wheels, support wheels, and/or running wheels (16) that are, in particular, fitted with pneumatic tires, wherein in each case at least two running wheels (16), which are arranged as a running wheel pair (20) next to each other and offset to each other in driving direction (28) or arranged one after another, are held and/or movably mounted on a machine frame (22, 24, 44) via a common suspension, **characterised in that** the respective running wheel pair (20) is mounted on an axle rocker (42), which is pivotably mounted on the machine frame (22, 24, 44), and which has a defined pivotability by a pivot angle in relation to the machine frame (22, 24, 44), and wherein at least one running wheel (16) of the respective running wheel pair (20) has a braking device (46), which is supported against a suspension section (44) of the suspension or, as the case may be, of the machine frame (22, 24), via at least one support strut (52) and/or one linkage (54) and/or one linkage section (52).

2. The undercarriage as recited in claim 1, in which the support of the at least one braking device against the suspension section (44) of the suspension and/or of the machine frame (22, 24) forms a four-joint arrangement or a parallelogram arrangement.

3. The undercarriage as recited in claim 1 or 2, in which the two running wheels (16) of a running wheel pair (20) are each assigned a separate braking device (46), wherein at least one of the braking devices (46) is supported against the suspension section (44) of the suspension or, as the case may be, of the machine frame (22, 24), via at least one support strut (52) and/or one linkage (54).

4. The undercarriage as recited in claim 3, in which the two braking devices (46) of the running wheel pair (20) are supported against the suspension section (44) of the suspension or, as the case may be, of the machine frame (22, 24) via one support strut (52) and/or one linkage (54) in each case, and/or are coupled with each other via the linkage (54).

5. The undercarriage as recited in claim 3 or 4, in which the two braking devices (46) of a running wheel pair (20) or the at least one braking device (46) of one of the running wheels (16) and a paraxial area of the respective other, unbraked running wheel (16) are coupled with each other via a linkage (54), which supports the axle rocker (42) and/or the running wheels (16) of the respective running wheel pair against each other and/or against a section of the suspension (44).

6. The undercarriage as recited in one of the claims 1 to 5, in which the braking device (46) of the at least one running wheel (16) of the running wheel pair (20) or the braking devices (46) of both running wheels (16) each comprise a brake disc (48), which is torque-proofly coupled with the respective running wheel (16), and a brake calliper (50), which is supported against the axle rocker (42), wherein the two brake calipers (50) of the respective running wheel pair (20) are coupled with each other via a linkage (54) and/or are supported against each other and/or on a section of the suspension (44).

7. The undercarriage as recited in one of the claims 1 to 6, in which the linkage (54) in each case assigned to each of the two brake callipers (50) of the running wheel pair (20) is connected to the support section (44) of the machine frame (22, 24).

8. The undercarriage as recited in claim 7, in which each brake calliper (50) of the running wheel pair (20) is connected to the support section (44) of the machine frame (22, 24) via a separate linkage section (52) and a connecting bracket (56), which is articulatedly connected thereto.

9. The undercarriage as recited in claim 7 or 8, in which the linkage sections (52) of the two running wheels (16) of the running wheel pair (20), which linkage sections (52) are connected to the support section (44) and/or to the connecting bracket (56), each form parts of carriers for the two brake callipers (50) of the running wheels (16).

10. The undercarriage as recited in one of the claims 1 to 9, in which the linkage sections (52) of the two running wheels (16) of the running wheel pair (20), which linkage sections (52) are connected to the support section (44) and/or to the connecting bracket (56), together form a four-bar linkage or a parallelogram.

11. The undercarriage as recited in one of the claims 1 to 10, in which a plurality of running wheel pairs (20) arranged closely next to each other are each arranged at and mounted on largely identical support sections (44) of the common machine frame (22, 24).

12. The undercarriage as recited in one of the claims 1 to 11, which is part of a braked agricultural packer device (12, 14), wherein the running wheels (16) in each case form the packer wheels (14).

13. The undercarriage as recited in one of the claims 1 to 12, in which several running wheel pairs (20) are arranged at the rear end of the agricultural machine (12).

14. The undercarriage as recited in one of the claims 1 to 12, in which several running wheel pairs (20) are arranged in a middle section of the agricultural machine (12).

15. The undercarriage as recited in claim 13 or 14, in which the running wheel pairs (20) are adjustable in height and/or are raisable and/or bringable out of engagement with the ground for driving in the field.

## Revendications

1. Châssis (10) d'une machine agricole (12) tractée ou attelée de manière semi-portée à un tracteur agricole ou automotrice, qui présente une pluralité de roues, en particulier à pneus, de compacteur, d'appui et/ou de roulement (16), dans lequel respectivement au moins deux roues de roulement (16) qui sont disposées les unes à côté des autres et, dans la direction de marche (28), de manière décalée les unes par rapport aux autres ou les unes derrière les autres sont maintenues et/ou logées de manière mobile, en tant que paires de roues de roulement (20), par une suspension commune sur un bâti de machine (22, 24, 44), **caractérisé par le fait que** la paire de roues de roulement (20) respective est logée sur un bras oscillant d'essieu (42) logé à pivotement sur ledit bâti de machine (22, 24, 44), ledit bras oscillant d'essieu (42) présente une capacité définie de pivotement d'un angle de pivotement par rapport au bâti de machine (22, 24, 44), et dans lequel au moins une roue de roulement (16) de la paire de roues de roulement (20) respective dispose d'un dispositif de freinage (46) qui est appuyé sur une portion de suspension (44) de la suspension ou bien du bâti de machine (22, 24) par au moins une entretoise d'appui (52) et/ou une tringlerie (54) et/ou une portion de tringlerie (52).

2. Châssis selon la revendication 1, dans lequel l'appui dudit au moins un dispositif de freinage sur la portion de suspension (44) de la suspension et/ou du bâti de machine (22, 24) forme un agencement en quadrilatère articulé ou un agencement en parallélogramme.

3. Châssis selon la revendication 1 ou 2, dans lequel respectivement un dispositif de freinage (46) séparé est associé aux deux roues de roulement (16) d'une paire de roues de roulement (20), l'un au moins des dispositifs de freinage (46) étant appuyé sur la portion de suspension (44) de la suspension ou bien du bâti de machine (22, 24) par au moins une entretoise d'appui (52) et/ou une tringlerie (54).

4. Châssis selon la revendication 3, dans lequel les deux dispositifs de freinage (46) de la paire de roues de roulement (20) sont appuyés sur la portion de suspension (44) de la suspension ou bien du bâti de machine (22, 24) par respectivement une entretoise d'appui (52) et/ou une tringlerie (54) et/ou sont couplés entre eux par la tringlerie (54).

5. Châssis selon la revendication 3 ou 4, dans lequel les deux dispositifs de freinage (46) d'une paire de roues de roulement (20) ou ledit au moins un dispositif de freinage (46) de l'une des roues de roulement (16) et une zone proche de l'essieu de l'autre roue de roulement (16) respective non freinée sont couplés entre eux par une tringlerie (54) qui appuie les uns contre les autres et/ou sur une portion de la suspension (44) ledit bras oscillant d'essieu (42) et/ou les roues de roulement (16) de la paire de roues de roulement respective.

6. Châssis selon l'une quelconque des revendications 1 à 5, dans lequel le dispositif de freinage (46) de ladite au moins une roue de roulement (16) de la paire de roues de roulement (20) ou les dispositifs de freinage (46) des deux roues de roulement (16) comprennent chacun un disque de frein (48) couplé de manière solidaire en rotation à la roue de roulement (16) respective ainsi qu'un étrier de frein (50) appuyé sur le bras oscillant d'essieu (42), les deux étriers de frein (50) de la paire de roues de roulement (20) respective étant couplés l'un à l'autre par une tringlerie (54) et/ou s'appuyant l'un contre l'autre et/ou sur une portion de la suspension (44).

7. Châssis selon l'une quelconque des revendications 1 à 6, dans lequel la tringlerie (54) associée respectivement à chacun des deux étriers de frein (50) de la paire de roues de roulement (20) est reliée à la portion d'appui (44) du bâti de machine (22, 24).

8. Châssis selon la revendication 7, dans lequel chaque étrier de frein (50) de la paire de roues de roulement (20) est relié par une portion de tringlerie (52) séparée et par un étrier de liaison (56) relié par articulation à celle-ci, à ladite portion d'appui (44) du bâti de machine (22, 24).

9. Châssis selon la revendication 7 ou 8, dans lequel les portions de tringlerie (52) des deux roues de roulement (16) de la paire de roues de roulement (20), qui sont reliées à la portion d'appui (44) et/ou à l'étrier de liaison (56), forment chacune des parties de supports pour les deux étriers de frein (50) des roues de roulement (16).

10. Châssis selon l'une quelconque des revendications 1 à 9, dans lequel les portions de tringlerie (52) des deux roues de roulement (16) de la paire de roues de roulement (20), qui sont reliées à la portion d'appui (44) et/ou à l'étrier de liaison (56), forment ensemble un quadrilatère articulé ou un parallélogramme.

11. Châssis selon l'une quelconque des revendications 1 à 10, dans lequel une pluralité de paires de roues de roulement (20) disposées étroitement les unes à côté des autres est disposée et logée chacune sur des portions d'appui (44) dans une large mesure identiques du bâti de machine (22, 24) commun.

12. Châssis selon l'une quelconque des revendications 1 à 11, qui fait partie d'un dispositif compacteur (12, 14) agricole freiné, dans lequel les roues de roulement (16) forment chacune les roues de compacteur (14).

13. Châssis selon l'une quelconque des revendications 1 à 12, dans lequel une pluralité de paires de roues de roulement (20) est disposée côté arrière sur la machine agricole (12).

14. Châssis selon l'une quelconque des revendications 1 à 12, dans lequel une pluralité de paires de roues de roulement (20) est disposée dans une portion centrale sur la machine agricole (12).

15. Châssis selon la revendication 13 ou 14, dans lequel les paires de roues de roulement (20) sont réglables en hauteur et/ou peuvent être soulevées et/ou être mise hors prise du sol pour une conduite dans les champs.
